# EUROPÄISCHE PATENTSCHRIFT

(11) **EP 0 561 247 B1**
(45) Veröffentlichungstag und Bekanntmachung des Hinweises auf die Patenterteilung: **08.11.1995**
(21) Anmeldenummer: 93103662.8
(22) Anmeldetag: 08.03.1993
(51) Int. Cl.: B23B 31/12

(54) **Bohrfutter für Handwerkzeugmaschinen**
Drill chuck for hand tool machines
Mandrin pour machine-outils portatives

(30) Priorität: 17.03.1992 DE 4208460
(43) Veröffentlichungstag der Anmeldung: 22.09.1993
(73) Patentinhaber: ROBERT BOSCH GMBH, 70442 Stuttgart (DE)
(72) Erfinder: Kränzler, Ernst, W-7022 Leinfelden-Echterdingen 3 (DE)

(56) Entgegenhaltungen:
- WO-A-90/11860
- DE-A- 2 808 921
- DE-A- 3 411 127
- DE-A- 3 501 870
- US-A- 2 910 302

## Beschreibung

Die Erfindung geht aus von einem Bohrfutter nach dem Oberbegriff des Anspruchs 1. Ein solches Bohrfutter mit Einzelteilen aus Stahl ist aus der WO 90/11860 bekannt.

### Vorteile der Erfindung

Das erfindungsgemäße Bohrfutter mit den kennzeichnenden Merkmalen des Anspruchs 1 hat demgegenüber den Vorteil, daß es ein geringeres Gewicht aufweist und einfacher zu fertigen ist. Als weiterer Vorteil kommt hinzu, daß sich die erforderliche Spannkraft ohne Werkzeug, wie z. B. Bohrfutterschlüssel, von Band aufbringen läßt. Die Gewichtseinsparung wird vor allem durch die Verwendung von Kunststoffteilen an Stelle von Stahlteilen erzielt. Die erforderliche Festigkeit der Kunststoffteile wird durch eingelegte Metallfedern, insbesondere Kegelfedern erreicht. Die Fertigungsvereinfachung ist bauartbedingt, z. B. fallen Pressenarbeitsgänge gänzlich weg.

Durch die in den abhängigen Ansprüchen aufgeführten Maßnahmen sind vorteilhafte Weiterbildungen und Verbesserungen des im Anspruch 1 angegebenen Bohrfutters möglich. Besonders vorteilhaft ist es, wenn das Gewinde des aus Kunststoff gefertigten Gewinderings als Kegelfeder mit vorzugsweise rechteckigem Querschnitt ausgebildet ist. Der Gewindering und die Backenführungshülse sind mittels einer von einem Sicherungsring gehaltenen Stützscheibe auf dem Grundkörper des Bohrfutters axial festgelegt. Ein mit Nocken versehenes drehbares Druckstück zwischen Backenführungshülse und Stützscheibe dient dem Zweck, die Spannkraft auf das eingespannte Werkzeug zu verstärken.

### Zeichnung

Ein Ausführungsbeispiel der Erfindung ist in der Zeichnung dargestellt und in der nachfolgenden Beschreibung näher erläutert.

### Beschreibung des Ausführungsbeispiels

Eine Bohrmaschine 1 weist in ihrem Gehäuse 2 einen Motor 4 mit Abtriebsritzel 5 auf. Über ein Getriebe 6 und eine Spindel 8 ist ein Bohrfutter 7 drehend antreibbar.

Das Bohrfutter 7 besteht aus einem Grundkörper 9, der an seinem von außen zugänglichen vorderen Ende einen rohrförmigen Abschnitt 10 aufweist. Innerhalb des Abschnitts 10 befindet sich ein offen ausmündender Hohlraum 11 für ein einzuspannendes, in der Zeichnung jedoch nicht dargestelltes Werkzeug. Der rohrförmige Abschnitt 10 weist, rotationssymmetrisch zur Achse 12 des Bohrfutters angeordnet, drei Durchbrüche 13 für drei verstellbare Futterbacken 14 auf.

Auf den rohrförmigen Abschnitt 10 des Grundkörpers 9 sind von vorne her folgende Teile aufgesteckt: Am weitesten hinten liegt ein Stützring 16 direkt an dem Grundkörper 9 an. Der Stützring 16 weist drei Bohrungen zum Durchgriff der Futterbacken 14 auf. Daran schließt sich ein Gewindering 17 aus Kunststoff an, der ein konisches Innengewinde 18 aufweist. Dieses ist von einer in den Gewindering eingespritzten Kegelfeder 19 gebildet, deren Federdraht einen rechteckigen Querschnitt aufweist. Das Innengewinde 18 greift, wie von Bohrfuttern allgemein bekannt, in rückseitige Zähne der Futterbacken 14 ein. Der Gewindering 17 ist einstückig verbunden mit einer Stellhülse 20, die den Stützring 16 überdeckend, eine große Außenfläche zur Drehbetätigung von Hand aufweist.

An den Gewindering 17 schließt sich eine Druckfeder 21 und eine innen konisch ausgebildete Backenführungshülse 22 aus Kunststoff an. Die innere, die Futterbacken 14 stützende Konusfläche der Backenführungshülse 22 wird von einer eingespritzten Kegelfeder 23 gebildet.

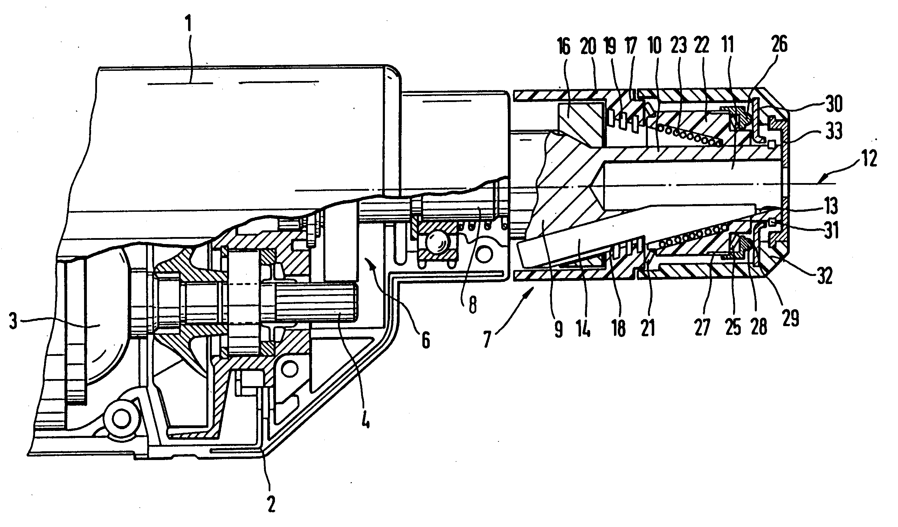

An die Backenführungshülse 22 schließt sich mit zwischengelegter Tellerfeder 25 ein Druckstück 26 an. Das Druckstück 26 ist über eine Schiebeverzahnung 27 drehfest mit der Backenführungshülse 22 verbunden. Auf seiner der Backenführungshülse 22 abgewandten Seite trägt das Druckstück 26 axiale Nocken 28, die mit Gegennocken 29 an einer Spannscheibe 30 zusammenarbeiten. Die Nocken 28, 29 arbeiten in gleicher Weise wie die in der DE 34 11 127 A1 beschriebenen Kugeln 41 und Erhöhungen 42. Die Nocken können auch als Teile schräg liegender Kugellaufbahnen ausgebildet sein, wie sie in den Figuren 1 und 2 der US 2,910,302 dargestellt sind. Die Spannscheibe 30 ist mittels eines Sicherungsrings 31, der in den rohrförmigen Abschnitt 10 eingreift, axial auf den Grundkörper 9 gesichert. Die Spannscheibe 30 ist fest mit einer Spannhülse 32 verbunden, die als Handhabe zum Drehen der Spannscheibe 30 ausgebildet ist. Dazu ist sie ebenfalls großflächig ausgebildet und schließt sich direkt an die Stellhülse 20 an. Nach vorne hin ist das Bohrfutter 7 von einer Staubkappe 33 aus Gummi abgeschlossen.

Zu der mit der Erfindung bezweckten Gewichtseinsparung führt vor allem die Ausführung des Gewinderings 17 und der Backenführungshülse 22 in Kunststoff, so daß nur noch die Futterbacken 14 und der Grundkörper 9 des Bohrfutters 7 aus Stahl gefertigt sind. Die nötige Festigkeit zur Führung der Futterbacken 14 wird durch die beiden Kegelfedern 19 und 23 gewährleistet.

Zum Spannen eines Werkzeugs in dem Bohrfutter 7 wird zunächst der Gewindering 19 an der Stellhülse 20 so weit gedreht, bis die Futterbacken 14 fest am Werkzeugschaft fest anliegen. Danach kann die Spannkraft auf das Werkzeug durch Drehen an der Spannhülse 32 bis zu ihrem Anschlag noch verstärkt werden. Dabei kommen die Gegennocken 29 gegenüber den Nocken 28 des Druckstücks zu liegen und das Druckstück 26 und die Backenführungshülse 22 werden in Richtung auf die Spindel 8 hin verschoben, wodurch die Futterbacken 14 über die innere Konusfläche nach innen gegen den Werkzeugschaft gepreßt werden. Die Tellerfeder 25 sorgt dafür, daß die Spannhülse 32 sich immer bis zu ihrem Anschlag zudrehen läßt und gleicht damit eine im individuellen Fall mehr oder weniger starke Axialverschiebung der Backenführungshülse 22 aus. Während des Betriebs der Maschine sorgt die Tellerfeder 25 für eine gleichbleibende Spannkraft im Bohrfutter 7.

Zum Lösen des Werkzeugs wird zunächst die Spannhülse 32 aufgedreht, wobei die Backenführungshülse 22 von der Druckfeder 21 nach vorne bewegt wird und sich von den Futterbacken 14 löst. Soweit erforderlich, kann zusätzlich noch die Stellhülse 17 geÖffnet werden, um die Einspannung des Werkzeugs ausreichend zu lockern.

Die Erfindung beschränkt sich nicht auf das Ausführungsbeispiel. Insbesondere kann auch eine andere Anzahl von Futterbacken verwendet werden.

## Patentansprüche

1. Bohrfutter für Handwerkzeugmaschinen, insbesondere Bohrmaschinen, mit einem Grundkörper (9) und mit mehreren, mittels eines Gewinderings (17) auf unterschiedliche Durchmesser von in das Futter einzusetzenden Werkzeugschäften einstellbaren Futterbacken (14), welche mit ihrer Rückseite an einer Backenführungshülse (22) abgestützt sind, dadurch gekennzeichnet, daß die Backenführungshülse (22) als Kunststoffteil ausgeführt ist, die innen als Anlagefläche für die Futterbacken (14) eine Kegelfeder (23) enthält.

2. Bohrfutter nach Anspruch 1, dadurch gekennzeichnet, daß die Kegelfeder (23) in die Backenführungshülse (22) eingespritzt ist.

3. Bohrfutter nach Anspruch 1 oder 2, dadurch gekennzeichnet, daß der Gewindering (17) aus Kunststoff gefertigt ist und als Innengewinde (18) eine Kegelfeder (19) mit vorzugsweise rechteckigem Querschnitt des Federdrahtes aufweist.

4. Bohrfutter nach einem der vorhergehenden Ansprüche, dadurch gekennzeichnet, daß der Gewindering (17) mit einer Stellhülse (20) zur Verstellung von Hand versehen ist.

5. Bohrfutter nach einem der vorhergehenden Ansprüche, dadurch gekennzeichnet, daß der Grundkörper (9) einen rohrförmigen Abschnitt (10) aufweist, auf den der Gewindering (17) und die Backenführungshülse (22) aufsteckbar sind.

6. Bohrfutter nach einem der vorhergehenden Ansprüche, dadurch gekennzeichnet, daß der Gewindering (17) und die Backenführungshülse (22) mittels einer Spannscheibe (30), die auf dem rohrförmigen Abschnitt (10) des Grundkörpers (9) befestigt ist, axial gesichert ist.

7. Bohrfutter nach einem der vorhergehenden Ansprüche, dadurch gekennzeichnet, daß zwischen der Spannscheibe (30) und der Backenführungshülse (22) ein mit Nocken (28) versehenes Druckstück (26) angeordnet ist, das mit Gegennocken (29) zusammenarbeitet, so daß der Abstand zwischen Spannscheibe (30) und Backenführungshülse (22) veränderbar ist.

8. Bohrfutter nach einem der vorhergehenden Ansprüche, dadurch gekennzeichnet, daß die Spannscheibe (30) mit einer manuell betätigbaren Spannhülse (32) verbunden ist, die sich an die Stellhülse (20) anschließt.

9. Bohrfutter nach einem der vorhergehenden Ansprüche 7 oder 8, dadurch gekennzeichnet, daß das Druckstück (26) durch eine Schiebeverzahnung (27) drehfest an die Backenführungshülse (22) gekoppelt ist und zwischen beiden eine Tellerfeder (25) angeordnet ist.

10. Bohrfutter nach einem der vorhergehenden Ansprüche, dadurch gekennzeichnet, daß zwischen Gewindering (17) und Backenführungshülse (22) eine Druckfeder (21) angeordnet ist.

## Claims

1. Drill chuck for powered hand tools, in particular drilling machines, having a basic body (9) and a plurality of chuck jaws (14) which can be adjusted by means of a threaded ring (17) to different diameters of tool shanks to be inserted into the chuck and are supported with their rear side against a jaw guide sleeve (22), characterized in that the jaw guide sleeve (22) is designed as a plastic part which contains a conical spring (23) on the inside as a bearing surface for the chuck jaws (14).

2. Drill chuck according to Claim 1, characterized in that the conical spring (23) is injected into the jaw guide sleeve (22).

3. Drill chuck according to Claim 1 or 2, characterized in that the threaded ring (17) is made of plastic and has as internal thread (18) a conical spring (19) having a preferably rectangular cross-section of the spring wire.

4. Drill chuck according to one of the preceding claims, characterized in that the threaded ring (17) is provided with an adjusting sleeve (20) for adjusting by hand.

5. Drill chuck according to one of the preceding claims, characterized in that the basic body (9) has a tubular section (10) onto which the threaded ring (17) and the jaw guide sleeve (22) can be slipped.

6. Drill chuck according to one of the preceding claims, characterized in that the threaded ring (17) and the jaw guide sleeve (22) are axially secured by means of a clamping disc (30) which is fastened to the tubular section (10) of the basic body (9).

7. Drill chuck according to one of the preceding claims, characterized in that a thrust piece (26) provided with dogs (28) is arranged between the clamping disc (30) and the jaw guide sleeve (22), which thrust piece (26) interacts with mating dogs (29) so that the distance between clamping disc (30) and jaw guide sleeve (22) can be varied.

8. Drill chuck according to one of the preceding claims, characterized in that the clamping disc (30) is connected to a clamping sleeve (32) which can be actuated manually and adjoins the adjusting sleeve (20).

9. Drill chuck according to one of the preceding Claims 7 and 8, characterized in that the thrust piece (26) is coupled to the jaw guide sleeve (22) in a rotationally locked manner by a sliding tooth system (27), and a disc spring (25) is arranged between the two.

10. Drill chuck according to one of the preceding claims, characterized in that a compression spring (21) is arranged between threaded ring (17) and jaw guide sleeve (22).

## Revendications

1. Mandrin de machine-outil portative, notamment perceuse, comportant un corps de base (9) avec plusieurs mors (14) réglables à des diamètres différents selon les tiges d'outils que doit recevoir le mandrin, le réglage se faisant par l'intermédiaire d'une bague filetée (17), les mors s'appuyant par leur face arrière contre une douille de guidage (22) pour les mors, caractérisé en ce que la douille de guidage (22) est une pièce en matière synthétique, qui contient intérieurement un ressort conique (23) servant de surface d'appui pour les mors (14).

2. Mandrin selon la revendication 1, caractérisé en ce que le ressort conique (23) est intégré par injection dans la douille de guidage pour les mors (22).

3. Mandrin selon la revendication 1 ou 2, caractérisé en ce que la bague filetée (17) est en matière plastique et comporte comme filetage intérieur (18) un ressort conique (19) formé d'un fil ayant de préférence une section rectangulaire.

4. Mandrin selon l'une des revendications précédentes, caractérisé en ce que la bague filetée (17) est munie d'une douille de réglage (20) pour assurer le réglage à la main.

5. Mandrin selon l'une des revendications précédentes, caractérisé en ce que le corps de base (9) comporte un segment tubulaire (10), sur lequel est emmanché la bague filetée (17) et la douille de guidage de mors (22).

6. Mandrin selon l'une des revendications précédentes, caractérisé en ce que la bague filetée (17) et la douille de guidage de mors (22) sont maintenues axialement par une rondelle de serrage (30) fixée sur le segment tubulaire (10) du corps de base (9).

7. Mandrin selon l'une des revendications précédentes, caractérisé en ce qu'entre la rondelle de serrage (30) et la douille de guidage de mors (23), il est prévu une pièce de poussée (26) comportant des cames (28), cette pièce coopérant avec des contre-cames (29) pour varier la distance séparant la rondelle de serrage (30) et la douille de guidage de mors (22).

8. Mandrin selon l'une des revendications précédentes, caractérisé en ce que la rondelle de serrage (30) est reliée à une douille de serrage (32) à commande manuelle, qui est adjacente à la douille de réglage (20).

9. Mandrin selon l'une des revendications 7 ou 8, caractérisé en ce que la pièce de poussée (26) est couplée solidairement en rotation à la douille de guidage de mors (22) par une denture coulissante (27) et entre les deux pièces, il y a un ressort Belleville (25).

10. Mandrin selon l'une des revendications précédentes, caractérisé par un ressort de compression (21) entre la bague filetée (17) et la douille de guidage pour les mors (22).
